# EUROPEAN PATENT SPECIFICATION

(11) **EP 4 386 337 B1**
(45) Date of publication and mention of the grant of the patent: **12.02.2025**
(21) Application number: 22214378.6
(22) Date of filing: 16.12.2022
(51) Int. Cl.: G01H 3/12, G01H 1/00, G08B 21/02

(54) **COMPUTER-IMPLEMENTED METHOD FOR DETECTING A STONE IMPACT ON A WINDOW OF A VEHICLE, DATA PROCESSING APPARATUS, SYSTEM FOR DETECTING A STONE IMPACT ON A WINDOW OF A VEHICLE, VEHICLE, COMPUTER PROGRAM AND COMPUTER-READABLE STORAGE MEDIUM**
COMPUTERIMPLEMENTIERTES VERFAHREN ZUM ERKENNEN EINES STEINSCHLAGS AUF EINER SCHEIBE EINES FAHRZEUGS, DATENVERARBEITUNGSVORRICHTUNG, SYSTEM ZUM ERKENNEN EINES STEINSCHLAGS AUF EINER SCHEIBE EINES FAHRZEUGS, FAHRZEUG, COMPUTERPROGRAMM UND COMPUTERLESBARES SPEICHERMEDIUM
PROCÉDÉ MIS EN OEUVRE PAR ORDINATEUR POUR DÉTECTER UN IMPACT DE PIERRE SUR UNE VITRE D'UN VÉHICULE, APPAREIL DE TRAITEMENT DE DONNÉES, SYSTÈME POUR DÉTECTER UN IMPACT DE PIERRE SUR LA VITRE D'UN VÉHICULE, VÉHICULE, PROGRAMME D'ORDINATEUR ET SUPPORT DE STOCKAGE LISIBLE PAR ORDINATEUR

(43) Date of publication of application: 19.06.2024
(73) Proprietor: Volvo Car Corporation, 405 31 Göteborg (SE)
(72) Inventor: BJÖRKLUND, Tomas, 40531 Göteborg (SE); FISCHER, Filip, 40531 Göteborg (SE); BOGERT, Björn, 40531 Göteborg (SE); GIBANICA, Mladen, 40531 Göteborg (SE); LAI, Yidan, 40531 Göteborg (SE); NILSSON, Pär, 40531 Göteborg (SE); ONG, Teik Huat, 40531 Göteborg (SE); KABRAL, Raimo, 40531 Göteborg (SE); JOHANSSON, Patrick, 40531 Göteborg (SE); WENG, Chenyang, 40531 Göteborg (SE)
(74) Representative: Maiwald GmbH

(56) References cited:
- US-A1- 2022 398 878
- US-B2- 10 417 911

## Description

The present disclosure relates to a computer-implemented method for detecting a stone impact on a window of a vehicle during operation of the vehicle.

The present disclosure relates further to a data processing apparatus comprising means for carrying out the above method, a system for detecting a stone impact on a window of a vehicle during operation of the vehicle, and a vehicle.

Additionally, the present disclosure relates to a computer program and a computer-readable storage medium.

Stone impact events, in particular stone shots, are events caused by stones being thrown-up by vehicles, in particular cars and/or trucks, driving ahead leading to damages on the windows of another vehicle driving behind. When a stone hits the window, small or large cracks and/or impact spots in the window, in particular windshield, occur which can obstruct the view of the driver through the window and can refract or reflect normally harmless light in ways that this light distracts or blinds the driver. Further, small and large cracks and/or impact spots in the window lead to a weakening of the window, such that larger cracks in the window can occur due to high temperature changes during the winter period and/or due to vibrations or hits when the vehicle drives over rough roads and bumps. Summarized, stone impacts on windows of a vehicle can be dangerous and/or lead to dangerous situations during operation of a vehicle.

US 2022/398878 A1 discloses a system for automated windshield damage detection and mitigation for autonomous vehicles. One example system includes a microphone positioned to detect sound waves inside the vehicle, one or more sensors positioned on the vehicle and configured to sense a characteristic of a windshield of the vehicle, and an electronic processor communicatively coupled to the one or more sensors and the microphone. The electronic processor is configured to receive sensor information from the one or more sensors and to receive an electrical signal from the microphone. The electronic processor is configured to determine, based on the sensor information, whether a crack event has occurred. The electronic processor is configured to, in response to determining that a crack event has occurred, determine a cause of the crack event based on the electrical signal received from the microphone. The electronic processor is configured to execute a mitigation action based on the cause of the crack event.

There may, therefore, be a need to detect stone impacts in a window in a precise, efficient and reliable manner, such that an occurrence of dangerous situations can be reduced.

The problem is at least partially solved or alleviated by the subject matter of the independent claims of the present disclosure, wherein further examples are incorporated in the dependent claims.

According to a first aspect, there is provided a computer-implemented method for detecting a stone impact on a window of a vehicle during operation of the vehicle according to claim 1.

In this context, the term stone impact as used herein is to be understood broadly and represents any impact events of stones on a window of a vehicle during operation of the vehicle. The stone impact may be a stone shot or a stone fall, but is not limited thereto. The stone impact leads to a characteristic sound signal with respect to amplitude and run of the amplitude curve. The window may be the windscreen, at least one side window and/or the rear window of a vehicle, but is not limited thereto. The term vehicle may be a car, a truck, a motor lorry, but is not limited thereto. A detection of the stone impact during operation of vehicle means that the detection may be executed respectively performed continuously or regularly from the start of the vehicle, i.e. when the vehicle board computer is turned on but the engine is still off or the engine is turned on. The detection may end once the vehicle is turned off, i.e. the engine of the vehicle is turned off. The term vicinity of the window as used herein is to be understood broadly. The vicinity may relate to points having a distance of 30cm or less from the window. Of course, also other definitions of vicinity are possible. The term representation as used herein is to be understood broadly and relates to a portion of a sound signal, in particular an amplitude of a sound signal, over a time range, originating from the vicinity of the vehicle. The term trained artificial intelligence unit as used herein is to be understood broadly and represents any artificial intelligence system being trainable with respect to the detection of a representation of a sound originating from a stone impact in a sound signal. The trained artificial intelligence unit receives the received at least one sound signal comprising a representation of a sound originating from a vicinity of the window for the determination whether the sound signal comprises a representation of a sound originating from a stone impact on the window. Beside the received at least one sound signal, the trained artificial intelligence unit may also receive further data which affects or may affect the determination or detection of stone impacts on the window. Exemplary, further data may be the velocity of the vehicle and/or the distance to the vehicle driving directly in front, but is not limited thereto. By using a trained artificial intelligence unit for determining whether the sound signal comprises a representation of a sound originating from a stone impact on the window, the occurrence of stone impacts on a window can be detected automatically during operation of a vehicle. This means that the detection does not require an interaction of a user. Thus, the detection of the occurrence of stone impacts can be provided in a precise, efficient and reliable manner. Therefore, an occurrence of dangerous situations during operation of a vehicle can be reduced.

According to the first aspect, the at least one sound signal comprises a sound signal being recorded external to the vehicle. In this context, the phrase external to the vehicle as used herein is to be understood broadly and represents that the at least one sound signal is recorded outside of the cabin of the vehicle, i.e. not in the cabin of the vehicle. For instance, the sound signal being recorded external to the vehicle may be recorded by at least one microphone being arranged at the bonnet, at the boot lid, at least one wiper and/or at the pillars of a vehicle, i.e. A-pillar, B-pillar and/or C-pillar. When recording the at least one sound signal external to the vehicle, the recording of interfering sound signals being provided by the user and/or driver in the cabin of the vehicle can be avoided. Therefore, the precision and effectivity of the detection of a stone impact can be significantly increased.

According to the first aspect, the at least one sound signal further includes a sound signal being recorded in the interior of the vehicle. In this context, the phrase in the interior of the vehicle as used herein is to be understood broadly and represents that the at least on sound signal is recorded inside of the cabin of the vehicle, i.e. in the cabin of the vehicle. For instance, the sound signal being recorded in the interior of the vehicle may be recorded by at least one microphone being arranged at the dashboard, at the back shelf, at the rearview mirror and/or at the pillars of a vehicle, i.e. A-pillar, B-pillar and/or C-pillar. When recording the at least one sound signal in the interior of the vehicle, the recording of interfering sound signals existing in the environment around the vehicle can be avoided. Therefore, the precision and effectivity of the detection of a stone impact can be significantly increased.

According to the first aspect, the at least one sound signal includes both a sound signal being recorded in the interior of the vehicle by at least one internal microphone and a sound signal being recorded external to the vehicle by at least one external microphone. When the at least one sound signal includes both a sound signal being recorded in the interior of the vehicle and a sound signal being recorded external to the vehicle, interfering sound signals existing in the environment around the vehicle and in the cabin of the vehicle can be identified and filtered out such that a stone impact can be easier detected. Therefore, the precision and effectivity of the detection of a stone impact can be significantly increased.

In an example, the artificial intelligence unit may be trained to recognize sound signals not comprising a representation of a sound originating from a stone impact. Such signals can be designated as negative samples or negative signals. In this example, it is determined that a stone impact has occurred, if the artificial intelligence unit does not recognize a sound signal not comprising a representation of a sound originating from a stone impact.

In a further example, the artificial intelligence unit may be trained to recognize sound signals comprising a representation of a sound originating from a stone impact. Such signals can be designated as positive samples or positive signals. In this example, it is determined that a stone impact has occurred, if the artificial intelligence unit recognizes that a sound signal comprises a representation of a sound originating from a stone impact.

Of course, also a combination of the two above examples is possible, i.e. an artificial intelligence unit may be used that is trained for both recognizing sound signals not comprising a representation of a sound originating from a stone impact and recognizing sound signals comprising a representation of a sound originating from a stone impact.

In an example, the artificial intelligence unit comprises a recurrent neural network (RNN) such as a long short-term memory RNN. Such a neural network is well-suitable for handling time-series of undefined length. It is also able to learn. Thus, a representation of a sound originating from a stone impact may be reliably determined.

In an example, the artificial intelligence unit comprises a convolutional neural network. Even though typically designed for image data, such neural networks can also be used for analyzing audio data. Thus, also in this example, a representation of a sound originating from a stone impact may be reliably determined.

In this context, an artificial intelligence model can be understood as a trained neural network, e.g. of the types as mentioned above. During the training, the network weights are set, for example such that a loss function is minimized. If the artificial intelligence model is able to learn, the network weights are further adapted during use.

In an example, training and/or using the artificial intelligence unit may comprise normalizing input data, e.g. time shifting data such that the strongest sound peak is at the same position for every sample. Additionally or alternatively, a feature extraction technique may be performed on the sound signal. The feature extraction technique may comprise using Fourier transformation.

According to an example of the method, the method further comprises the step of providing a stone impact notification to a user of the vehicle, if the sound signal is determined to comprise a representation of a sound originating from a stone impact on the window. In this context, the term notification as used herein is to be understood broadly and represents any note giving the user of the vehicle information about the occurrence of a stone impact. The notification may be a note, a warning sign and/or a warning sound, but is not limited thereto. The user of the vehicle may be a driver, a passenger and/or the owner of the vehicle. In case the user is a driver of the vehicle, surprising behavior of the vehicle, e.g. changed refractions or reflections of light, is avoided. In this case, the stone impact notification can be provided to the user by displaying the stone impact notification on a display unit of the vehicle and/or by sending the stone impact notification to a contact medium, e.g. mobile phone or E-mail, of the driver. Hence, an occurrence of dangerous situations can be reduced. Further, due to knowing about the occurrence of a stone impact, the user can notify the stone impact to the insurance and/or can make a repair appointment with the workshop. In a case in which the driver is not the owner of the vehicle, the stone impact notification can be provided to the owner of the vehicle by sending the stone impact notification to a contact medium, e.g. mobile phone or E-mail, of the owner. Hence, an occurrence of dangerous situations can be reduced. Further, due to knowing about the occurrence of a stone impact, the owner can notify the stone impact to the insurance and/or can make a repair appointment with the workshop.

According to an example of the method, the stone impact notification includes at least one of an information about the time of the stone impact, an information about a location of the stone impact, an information about a strength of the stone impact, an information about a potential damage of the stone impact, and at least a portion of the sound signal comprising the representation of the sound originating from a stone impact. Thus, the owner or user of the vehicle can estimate the urgency to repair or exchange the window of the vehicle in order to reduce an occurrence of dangerous situations during operation of the vehicle.

According to an example of the method, the stone impact notification further includes an action relevance information based on at least one of the location of the stone impact, the strength of the stone impact and the potential damage of the stone impact. The term action relevance information as used herein is to be understood broadly and represents any information indicating the relevance or urgency to execute an action. An action may be a repair or an exchange of the window, but is not limited thereto. The action relevance information may be provided respectively determined by an action relevance determination unit. In case a strong stone impact is detected in the view field of the driver, the action relevance information indicates that the window has to be exchanged as soon as possible. Additionally or alternatively, the action relevance information may further include suggestions of nearby workshops which can repair or exchange the window, instructions to reduce the speed of the vehicle during operation in order to prevent an aggravation of the damage and/or instructions to stop the vehicle immediately, but is not limited thereto. By providing the user of the vehicle with action relevance information, the user can estimate the severity of the damage provided by the stone impact. Hence, an occurrence of dangerous situations can be reduced.

According to an example of the method, the determining whether the sound signal comprises a representation of a sound originating from a stone impact on the window is performed continuously or regularly during operation of the vehicle. The term continuously as used herein is to be understood broadly and represents that the determination is performed the whole time during operation of the vehicle. By executing the determination continuously stone impacts are detected directly/immediately when they happen. The term regularly as used herein is to be understood broadly and represents that the performing/execution of the determination of the occurrence of a stone impact is executed according to a predefined schedule, e.g. each 5 seconds. By performing the determination of the occurrence of a stone impact continuously or regularly during operation of the vehicle, the user of the vehicle can be immediately informed or notified about the occurrence of a stone impact. Thus, an occurrence of dangerous situations can be reduced.

The method is computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method according to the present disclosure. When using such a data processing apparatus, a stone impact on a window of a vehicle can be detected in a precise, efficient and reliable manner. Thus, an occurrence of dangerous situations can be reduced.

According to a third aspect, there is provided a system for detecting a stone impact on a window of a vehicle during operation of the vehicle. The system comprises at least one microphone for generating at least one sound signal comprising a representation of a sound originating from a vicinity of the window. Further, the system comprises a data processing apparatus according to the present disclosure and an interface for providing a detection result describing whether the sound signal comprises a representation of a sound originating from a stone impact. The at least one microphone and the interface are communicatively connected to the data processing apparatus. The interface may be a display unit being arranged in the cabin of the vehicle, in particular on the dashboard, displaying the detection result to a user of the vehicle. The interface may be communicatively connected to the data processing apparatus. Thus, when using such a system, a stone impact on a window of a vehicle can be detected in a precise, efficient and reliable manner such that an occurrence of dangerous situations can be reduced.

According to the third aspect, the at least one microphone comprises at least one microphone being arrangeable external to the vehicle for recording at least one sound originating from an exterior of the vehicle. For instance, the microphone for recording a sound signal external to the vehicle, i.e. not in the inner volume of the driver cabin, may be arranged at the bonnet, at the boot lid, at least one wiper and/or at the pillars of a vehicle, i.e. A-pillar, B-pillar and/or C-pillar. When recording the at least one sound signal external to the vehicle, the recording of interfering sound signals being provided by the user and/or driver in the cabin of the vehicle can be avoided. Therefore, the precision and effectivity of the detection of a stone impact can be significantly increased.

According to the third aspect, the at least one microphone further includes at least one microphone being arrangeable in the interior of a vehicle for recording at least one sound originating from an interior of the vehicle. For instance, the microphone for recording a sound signal in the interior of the vehicle, i.e. in the inner volume of the cabin, may be arranged at the dashboard, at the back shelf, at the rearview mirror and/or at the pillars of a vehicle, i.e. A-pillar, B-pillar and/or C-pillar. When recording a sound signal included in the at least one sound signal in the interior of the vehicle, the recording of interfering sound signals existing in the environment around the vehicle can be avoided. Therefore, the precision and effectivity of the detection of a stone impact can be significantly increased.

According to an example of the system, the system further comprises a communication unit for providing a stone impact notification to a user of the vehicle, wherein the communication unit is communicatively connected to the data processing apparatus. In this context, the term communication unit is to be understood broadly and represents any unit/device being able to communicate a stone impact notification to a user of the vehicle. In an example, the communication unit may be a unit having a transmitter or a transmitter and a receiver allowing a one-way or two-way communication between the communication unit and the user of the vehicle. The communication unit may be communicatively connected to the data processing apparatus. In case the user is a driver of the vehicle, the communication unit provides the user of the vehicle with a stone impact notification, which notifies the user with the occurrence of a stone impact such that the user is not surprised of e.g. changed refractions or reflections of light. Hence, an occurrence of dangerous situations can be reduced. Additionally or alternatively, the communication unit may provide the owner of the vehicle with a stone impact notification such that the owner can notify the insurance and/or can make a repair appointment with the workshop.

According to a fourth aspect, there is provided a vehicle comprising a system according to the third aspect for detecting a stone impact on a window of a vehicle during operation of the vehicle. Thus, when using a system for detecting a stone impact on a window in a vehicle, a stone impact on a window of a vehicle can be detected in a precise, efficient and reliable manner such that an occurrence of dangerous situations can be reduced.

According to a fifth aspect, there is provided a computer program comprising instructions which, when the program is executed by a computer, cause the computer to carry out the method according to the present disclosure. Thus, when using such a system, stone impacts on a window of a vehicle can be detected in a precise, efficient and reliable manner such that an occurrence of dangerous situations can be reduced.

According to a sixth aspect, there is provided a computer-readable storage medium comprising instructions which, when executed by a computer, cause the computer to carry out the method according to the present disclosure. Thus, when using such a system, stone impacts on a window of a vehicle can be detected in a precise, efficient and reliable manner such that an occurrence of dangerous situations can be reduced.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Fig. 1: shows a vehicle according to the present disclosure being equipped with a system for detecting a stone impact on a window of a vehicle during operation of the vehicle according to the present disclosure having a data processing apparatus according to the present disclosure, a computer-readable storage medium according to the present disclosure and a computer program according to the present disclosure, such that a method according to the present disclosure can be performed in connection with the vehicle,
- Fig. 2: shows the data processing apparatus of Figure 1 in more detail,
- Fig 3: illustrates steps of the method for detecting a stone impact on a window of a vehicle during operation of the vehicle according to the present disclosure.

The Figures are merely schematic representations and serve only to illustrate examples of the disclosure. Identical or equivalent elements are in principle provided with the same reference signs.

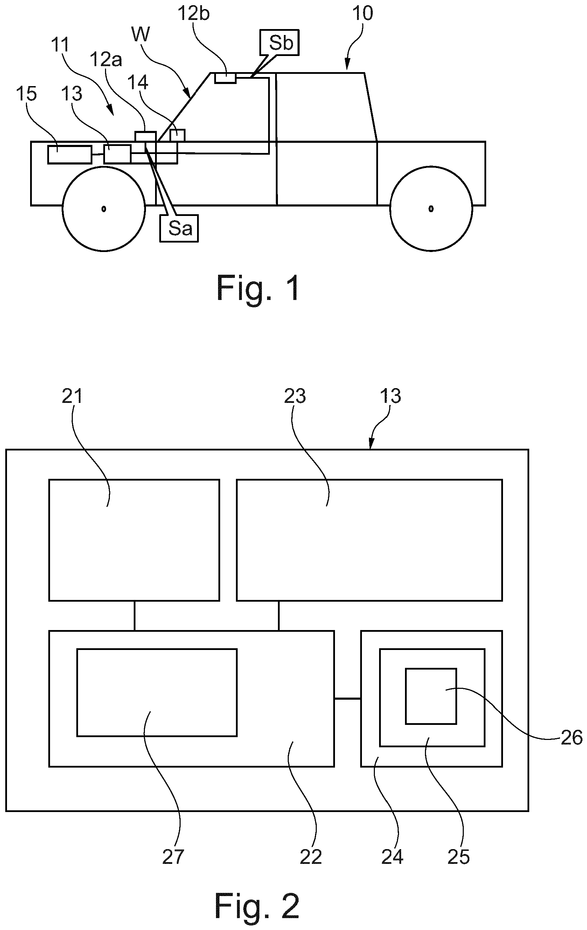

Figure 1 shows a vehicle 10 comprising a system 11 for detecting a stone impact on a window W of the vehicle 10 during operation of the vehicle 10.

In the example shown in the Figures, the window W is a windshield.

The system 11 comprises two microphones 12a, 12b.

The first microphone 12a is arranged at the bonnet, i.e. external to the vehicle 10.

The second microphone 12b is arranged at the roof of the cabin of the vehicle 10, i.e. in the interior of the vehicle 10.

Both microphones 12a, 12b are arranged within a distance of approximately 15 cm from the window W of the vehicle 10.

Further, the system 11 comprises a data processing apparatus 13. The two microphones 12a, 12b are communicatively coupled to the data processing apparatus 13. The coupling between the two microphones 12 and the data processing apparatus 13 can be provided by wire or wireless.

Furthermore, the system 11 comprises an interface 14 for providing a detection result describing whether the sound signal comprises a representation of a sound originating from a stone impact.

The interface 14 is a display being arranged at the dashboard in the interior of the vehicle 10.

The interface is communicatively coupled to the data processing apparatus 13.

Furthermore, the system 11 comprises a communication unit 15 for providing a stone impact notification to a user of the vehicle 10. The communication unit 15 is communicatively connected to the data processing apparatus 13. The communication unit 15 is a transmitting device allowing a one-way communication between the communication unit 15 and the user.

Figure 2 shows a detailed illustration of the data processing apparatus 13.

The data processing apparatus 13 comprises a receiving unit 21 for receiving at least one sound signal comprising a representation of a sound originating from a vicinity of the window. The receiving unit 21 receives the at least one sound signal from both microphones 12a, 12b respectively, i.e. two sound signals are received at the receiving unit 21.

The sound signal originating from the first microphone 12a is denoted Sa. The sound signal originating from the second microphone is denoted Sb.

Further, the data processing apparatus 13 comprises a determination unit 22 for determining whether the sound signal Sa, Sb comprises a representation of a sound originating from a stone impact on the window W using a trained artificial intelligence unit 27.

The determination unit 22 includes the trained artificial intelligence unit 27. The trained artificial intelligence unit 27 comprises an artificial intelligence model having a trained algorithm. The trained artificial intelligence unit 27 is trained to recognize stone impacts from the sound signals Sa, Sb being provided by the microphones 12a, 12b.

To this end, sound signals Sa, Sb are first collected and then labelled.

The trained artificial intelligence unit 27 also comprises background sound samples not comprising a representation of a stone shot.

Additionally, further data like velocity of the vehicle that affects the characteristics of stone shots are provided to the trained artificial intelligence unit 27.

If the trained artificial intelligence unit 27 does not recognize the at least one sound signals Sa, Sb as to include a stone impact, the method is abandoned and the sound signals Sa, Sb are discarded.

Furthermore, the data processing apparatus comprises a providing unit 23 for providing a detection result describing whether the sound signal Sa, Sb comprises a representation of a sound originating from a stone impact. The providing unit 23 is triggered to provide information about the possible stone shot to the user of the vehicle via the interface 14 and the communication unit 15 of the system 11 by the trained artificial intelligence unit 27.

Further, the data processing apparatus 13 comprises a data storage unit 24. The data storage unit 24 comprises a computer-readable storage medium 25 and on the computer-readable storage medium 25 a computer program 26 is provided.

The computer program 26 comprises instructions which, when executed by the data processing apparatus 13 or more generally a computer, cause the computer to carry out a method for detecting a stone impact on a window W of a vehicle 10 during operation of the vehicle.

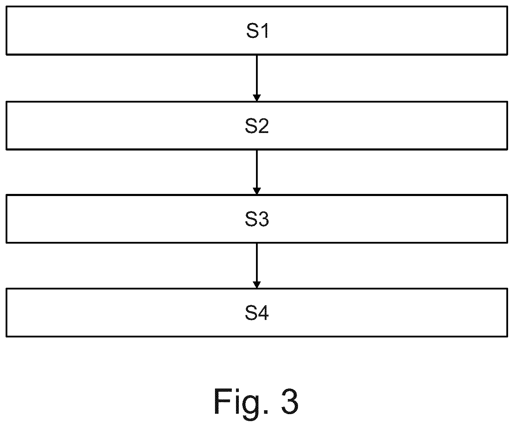

In the following, a method for detecting a stone impact on a window W of a vehicle 10 during operation of the vehicle 10 will be explained with reference to Figure 3.

During the performance of the method, the two microphones 12a, 12b continuous record sound signals Sa, Sb and provide these sound signals Sa, Sb to the data processing apparatus 13.

In a first step S1, sound signals Sa, Sb comprising a representation of a sound originating from a vicinity of the window W are received at the data processing apparatus 13.

Thereafter, in a second step S2, it is determined whether the sound signal Sa, Sb comprises a representation of a sound originating from a stone impact on the window W. This is done by using a trained artificial intelligence unit 27.

In a third step S3, a detection result describing whether the sound signal Sa, Sb comprises a representation of a sound originating from a stone impact is provided. To this end, the providing unit 23 is used.

In an optional fourth step S4, a stone impact notification is provided to a user of the vehicle when the sound signal Sa, Sb is determined to comprise a representation of a sound originating from a stone impact on the window W. The stone impact notification has information about the location and the strength of the stone impact.

The method is executed continuously from a start of the vehicle 10 to a turn off of a vehicle.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 11: system
- 12a: first microphone
- 12b: second microphone
- 13: data processing apparatus
- 14: interface
- 15: communication unit
- 21: receiving unit
- 22: determining unit
- 23: providing unit
- 24: data storage unit
- 25: computer-readable storage medium
- 26: computer program
- 27: trained artificial intelligence unit

- Sa: sound signal originating from the first microphone
- Sb: sound signal originating from the second microphone
- S1: first step
- S2: second step
- S3: third step
- S4: fourth step
- W: window

## Claims

1. A computer-implemented method for detecting a stone impact on a window (W) of a vehicle (10) during operation of the vehicle (10), comprising:
- receiving at least one sound signal (Sa, Sb) being recorded external to the vehicle (10) by at least one external microphone (12a) and comprising a representation of a sound originating from a vicinity of the window (W) (S1);
- receiving at least one sound signal (Sa, Sb) being recorded in the interior of the vehicle (10) by at least one internal microphone (12b) and comprising a representation of a sound originating from a vicinity of the window (W) (S1);
- identifying and filtering out an interfering sound signal existing in the environment around the vehicle (10) and in the cabin of the vehicle (10) based on the at least one sound signal (Sa, Sb) being recorded external to the vehicle (10) and the at least one sound signal (Sa, Sb) being recorded in the interior of the vehicle (10);
- determining whether the filtered sound signal (Sa, Sb) comprises a representation of a sound originating from a stone impact on the window (W) using a trained artificial intelligence unit (27) (S2),
- providing a detection result describing whether the sound signal (Sa, Sb) comprises a representation of a sound originating from a stone impact (S3).

2. The method according to claim 1, further comprising
providing a stone impact notification to a user of the vehicle (10),
if the sound signal (Sa, Sb) is determined to comprise a representation of a sound originating from a stone impact on the window (W) (S4).

3. The method according to claim 2,
whereby the stone impact notification includes at least one of an information about the time of the stone impact, an information about a location of the stone impact, an information about a strength of the stone impact, an information about a potential damage of the stone impact, and at least a portion of the sound signal (Sa, Sb) comprising the representation of the sound originating from a stone impact.

4. The method according to claim 3,
whereby the stone impact notification further includes an action relevance information based on at least one of the location of the stone impact, the strength of the stone impact and the potential damage of the stone impact.

5. The method according to any one of the preceding claims,
whereby determining whether the sound signal (Sa, Sb) comprises a representation of a sound originating from a stone impact on the window (W) is performed continuously or regularly during operation of the vehicle (10).

6. A data processing apparatus (13) comprising means for carrying out the method of any one of the preceding claims.

7. A system (11) for detecting a stone impact on a window (W) of a vehicle during operation of the vehicle (10), comprising:
- at least one external microphone (12a) for generating at least one sound signal (Sa, Sb) comprising a representation of a sound originating from a vicinity of the window (W), the at least one microphone (12) arrangeable external to the vehicle (10) for recording at least one sound originating from an exterior of the vehicle (10);
- at least one internal microphone (12b) for generating at least one sound signal (Sa, Sb) comprising a representation of a sound originating from a vicinity of the window (W), arrangeable in the interior of a vehicle (10) for recording at least one sound originating from an interior of the vehicle (10),
- the data processing apparatus (13) according to claim 6, and
- an interface (14) for providing a detection result describing whether the sound signal (Sa, Sb) comprises a representation of a sound originating from a stone impact,
wherein the at least one microphone (12) and the interface (14) are communicatively connected to the data processing apparatus (13).

8. The system (11) according to claim 7, further comprising:
a communication unit (15) for providing a stone impact notification to a user of the vehicle (10), wherein the communication unit (15) is communicatively connected to the data processing apparatus (13).

9. A vehicle (10) comprising the system (11) for detecting a stone impact on a window (W) of a vehicle (10) during operation of the vehicle (10) according to one of the claims 7 to 8.

10. A computer program (26) comprising instructions which, when the program is executed by a computer, cause the computer to carry out the method of claims 1 to 5.

11. A computer-readable storage medium (25) comprising instructions which, when executed by a computer, cause the computer to carry out the method of claims 1 to 5.

## Patentansprüche

1. Computerimplementiertes Verfahren zum Detektieren eines Steinschlags auf ein Fenster (W) eines Fahrzeugs (10) während des Betriebes des Fahrzeugs (10), wobei das Verfahren umfasst:
- Empfangen mindestens eines Geräuschsignals (Sa, Sb), das außerhalb des Fahrzeugs (10) durch mindestens ein externes Mikrofon (12a) aufgezeichnet wird und eine Darstellung eines Geräuschs umfasst, das aus einer Nähe des Fensters (W) stammt (S1);
- Empfangen mindestens eines Geräuschsignals (Sa, Sb), das im Inneren des Fahrzeugs (10) durch mindestens ein internes Mikrofon (12b) aufgezeichnet wird und eine Darstellung eines Geräuschs umfasst, das aus einer Nähe des Fensters (W) stammt (S1);
- Identifizieren und Herausfiltern eines interferierenden Geräuschsignals, das in der Umgebung des Fahrzeugs (10) und im Innenraum des Fahrzeugs (10) vorhanden ist, auf der Grundlage des mindestens einen Geräuschsignals (Sa, Sb), das außerhalb des Fahrzeugs (10) aufgezeichnet wird, und des mindestens einen Geräuschsignals (Sa, Sb), das im Innenraum des Fahrzeugs (10) aufgezeichnet wird;
- Bestimmen, ob das gefilterte Geräuschsignal (Sa, Sb) eine Darstellung eines Geräuschs umfasst, das von einem Steinschlag auf das Fenster (W) stammt, unter Verwendung einer trainierten Künstliche-Intelligenz-Einheit (27) (S2),
- Bereitstellen eines Detektierungsergebnisses, das beschreibt, ob das Geräuschsignal (Sa, Sb) eine Darstellung eines Geräuschs umfasst, das von einem Steinschlag (S3) stammt.

2. Verfahren nach Anspruch 1, umfassend des Weiteren das Bereitstellen einer Steinschlagbenachrichtigung für einen Benutzer des Fahrzeugs (10), falls bestimmt wird, dass das Geräuschsignal (Sa, Sb) eine Darstellung eines Geräuschs umfasst, das von einem Steinschlag auf das Fenster (W) stammt (S4).

3. Verfahren nach Anspruch 2,
wobei die Steinschlagbenachrichtigung mindestens eines von einer Information über den Zeitpunkt des Steinschlags, einer Information über die Position des Steinschlags, einer Information über eine Stärke des Steinschlags, einer Information über einen möglichen Schaden infolge des Steinschlags und mindestens einem Abschnitt des Geräuschsignals (Sa, Sb), der die Darstellung des Geräuschs umfasst, das von einem Steinschlag stammt, enthält.

4. Verfahren nach Anspruch 3,
wobei die Steinschlagbenachrichtigung des Weiteren eine Aktionsrelevanzinformation auf der Grundlage mindestens eines von der Position des Steinschlags, der Stärke des Steinschlags und dem potenziellen Schaden infolge des Steinschlags enthält.

5. Verfahren nach einem der vorangehenden Ansprüche,
wobei das Bestimmen, ob das Geräuschsignal (Sa, Sb) eine Darstellung eines Geräuschs umfasst, das von einem Steinschlag auf die Scheibe (W) stammt, kontinuierlich oder regelmäßig während des Betriebes des Fahrzeugs (10) durchgeführt wird.

6. Datenverarbeitungsvorrichtung (13), umfassend ein Mittel zum Ausführen des Verfahrens nach einem der vorangehenden Ansprüche.

7. System (11) zum Detektieren eines Steinschlags auf ein Fenster (W) eines Fahrzeugs während des Betriebes des Fahrzeugs (10), wobei das System umfasst:
- mindestens ein externes Mikrofon (12a) zum Generieren mindestens eines Geräuschsignals (Sa, Sb), das eine Darstellung eines Geräuschs umfasst, das aus einer Nähe des Fensters (W) stammt, wobei das mindestens eine Mikrofon (12) außerhalb des Fahrzeugs (10) angeordnet werden kann, um mindestens ein Geräusch aufzunehmen, das von außerhalb des Fahrzeugs (10) stammt;
- mindestens ein internes Mikrofon (12b) zum Generieren mindestens eines Geräuschsignals (Sa, Sb), das eine Darstellung eines Geräuschs umfasst, das aus einer Nähe des Fensters (W) stammt, das im Innenraum eines Fahrzeugs (10) angeordnet werden kann, um mindestens ein Geräusch aufzuzeichnen, das aus einem Innenraum des Fahrzeugs (10) stammt,
- die Datenverarbeitungsvorrichtung (13) nach Anspruch 6 und
- eine Schnittstelle (14) zum Bereitstellen eines Detektierungsergebnisses, das beschreibt, ob das Geräuschsignal (Sa, Sb) eine Darstellung eines Geräuschs umfasst, das von einem Steinschlag stammt,
wobei das mindestens eine Mikrofon (12) und die Schnittstelle (14) kommunikativ mit der Datenverarbeitungsvorrichtung (13) verbunden sind.

8. System (11) nach Anspruch 7, umfassend des Weiteren:
eine Kommunikationseinheit (15) zum Bereitstellen einer Steinschlagbenachrichtigung an einen Benutzer des Fahrzeugs (10), wobei die Kommunikationseinheit (15) kommunikativ mit der Datenverarbeitungsvorrichtung (13) verbunden ist.

9. Fahrzeug (10) . umfassend das System (11) zum Detektieren eines Steinschlags auf eine Scheibe (W) eines Fahrzeugs (10) während des Betriebes des Fahrzeugs (10) nach einem der Ansprüche 7 und 8.

10. Computerprogramm (26), umfassend Instruktionen, die, wenn das Programm durch einen Computer ausgeführt wird, den Computer veranlassen, das Verfahren nach den Ansprüchen 1 bis 5 auszuführen.

11. Computerlesbares Speichermedium (25), umfassend Instruktionen, die, wenn sie durch einen Computer ausgeführt werden, den Computer veranlassen, das Verfahren nach den Ansprüchen 1 bis 5 auszuführen.

## Revendications

1. Procédé mis en œuvre par ordinateur pour détecter un impact de pierre sur une vitre (W) d'un véhicule (10) pendant le fonctionnement du véhicule (10), comprenant :
- la réception d'au moins un signal sonore (Sa, Sb) enregistré à l'extérieur du véhicule (10) par au moins un microphone externe (12a) et comprenant une représentation d'un son provenant d'un voisinage de la vitre (W) (S1) ;
- la réception d'au moins un signal sonore (Sa, Sb) enregistré à l'intérieur du véhicule (10) par au moins un microphone interne (12b) et comprenant une représentation d'un son provenant d'un voisinage de la vitre (W) (S1) ;
- l'identification et le filtrage d'un signal sonore brouilleur existant dans l'environnement autour du véhicule (10) et dans l'habitacle du véhicule (10) sur la base de l'au moins un signal sonore (Sa, Sb) enregistré à l'extérieur du véhicule (10) et de l'au moins un signal sonore (Sa, Sb) enregistré à l'intérieur du véhicule (10) ;
- le fait de déterminer si le signal sonore filtré (Sa, Sb) comprend une représentation d'un son provenant d'un impact de pierre sur la vitre (W) à l'aide d'une unité d'intelligence artificielle entraînée (27) (S2),
- la fourniture d'un résultat de détection décrivant si le signal sonore (Sa, Sb) comprend une représentation d'un son provenant d'un impact de pierre (S3).

2. Procédé selon la revendication 1, comprenant en outre
la fourniture d'une notification d'impact de pierre à un utilisateur du véhicule (10), s'il est déterminé que le signal sonore (Sa, Sb) comprend une représentation d'un son provenant d'un impact de pierre sur la vitre (W) (S4).

3. Procédé selon la revendication 2,
dans lequel la notification d'impact de pierre inclut au moins l'une parmi une information concernant le moment de l'impact de pierre, une information concernant un emplacement de l'impact de pierre, une information concernant une force de l'impact de pierre, une information concernant des dommages potentiels de l'impact de pierre, et au moins une partie du signal sonore (Sa, Sb) comprenant la représentation du son provenant d'un impact de pierre.

4. Procédé selon la revendication 3,
dans lequel notification d'impact de pierre inclut en outre une information de pertinence d'action sur la base d'au moins l'un parmi l'emplacement de l'impact de pierre, la force de l'impact de pierre et/ou les dommages potentiels de l'impact de pierre.

5. Procédé selon l'une quelconque des revendications précédentes,
dans lequel la détermination du fait de savoir si le signal sonore (Sa, Sb) comprend une représentation d'un son provenant d'un impact de pierre sur la vitre (W) est effectuée de manière continue ou régulière pendant le fonctionnement du véhicule (10).

6. Appareil de traitement de données (13) comprenant des moyens pour mettre en œuvre le procédé selon l'une quelconque des revendications précédentes.

7. Système (11) permettant de détecter un impact de pierre sur une vitre (W) d'un véhicule pendant le fonctionnement du véhicule (10), comprenant :
- au moins un microphone externe (12a) pour générer au moins un signal sonore (Sa, Sb) comprenant une représentation d'un son provenant d'un voisinage de la vitre (W), l'au moins un microphone (12) pouvant être disposé à l'extérieur du véhicule (10) pour enregistrer au moins un son provenant de l'extérieur du véhicule (10) ;
- au moins un microphone interne (12b) pour générer au moins un signal sonore (Sa, Sb) comprenant une représentation d'un son provenant d'un voisinage de la vitre (W), pouvant être disposé à l'intérieur d'un véhicule (10) pour enregistrement au moins un son provenant d'un intérieur du véhicule (10),
- l'appareil de traitement de données (13) selon la revendication 6, et
- une interface (14) pour fournir un résultat de détection décrivant si le signal sonore (Sa, Sb) comprend une représentation d'un son provenant d'un impact de pierre,
dans lequel l'au moins un microphone (12) et l'interface (14) sont reliés en communication à l'appareil de traitement de données (13).

8. Système (11) selon la revendication 7, comprenant en outre :
une unité de communication (15) pour fournir une notification d'impact de pierre à un utilisateur du véhicule (10), dans lequel l'unité de communication (15) est reliée en communication à l'appareil de traitement de données (13).

9. Véhicule (10) comprenant le système (11) permettant de détecter un impact de pierre sur une vitre (W) d'un véhicule (10) pendant le fonctionnement du véhicule (10) selon l'une des revendications 7 à 8.

10. Programme informatique (26) comprenant des instructions qui, lorsque le programme est exécuté par un ordinateur, amènent l'ordinateur à exécuter le procédé des revendications 1 à 5.

11. Support de stockage lisible par ordinateur (25) comprenant des instructions qui, lorsqu'elles sont exécutées par un ordinateur, amènent l'ordinateur à exécuter le procédé des revendications 1 à 5.
